# FASCICULE DE BREVET EUROPEEN

(11) **EP 3 300 953 B1**
(45) Date de publication et mention de la délivrance du brevet: **10.07.2024**
(21) Numéro de dépôt: 17192236.2
(22) Date de dépôt: 20.09.2017
(51) Int. Cl.: B60Q 3/80, B60Q 3/16, H05B 47/105, H05B 47/17

(54) **SYSTÈME D'ÉCLAIRAGE INTÉRIEUR POUR VÉHICULE AUTOMOBILE AUTONOME**
INNENBELEUCHTUNGSSYSTEM FÜR AUTONOMES KRAFTFAHRZEUG
INTERIOR LIGHTING SYSTEM FOR AN AUTONOMOUS MOTOR VEHICLE

(30) Priorité: 28.09.2016 FR 1659202
(43) Date de publication de la demande: 04.04.2018
(73) Titulaire: Valeo Vision, 93012 Bobigny Cedex (FR)
(72) Inventeur: BEL, Romain, 93012 BOBIGNY Cedex (FR); BARILLOT, Thibaud, 93012 BOBIGNY Cedex (FR)
(74) Mandataire: Valeo Visibility

(56) Documents cités:
- WO-A1-2015/014964
- DE-A1- 102013 006 793
- DE-A1- 102015 008 666
- DE-A1- 102015 101 234
- DE-A1- 102015 110 903
- US-A1- 2015 094 897

## Description

La présente invention concerne un système d'éclairage intérieur pour un véhicule automobile autonome ainsi qu'un procédé mettant en oeuvre un tel système.

Les véhicules automobiles équipés de fonctions de conduite autonome permettent de remplacer intégralement l'action du conducteur d'un tel véhicule en agissant sur les commandes de pilotage du véhicule, telles que notamment la gestion de la vitesse du véhicule et sa direction. D'une manière générale, le véhicule autonome dans le contexte de la présente invention permet de prendre en charge l'ensemble des actions de conduite depuis le démarrage jusqu'à l'arrêt du véhicule autonome.

Dès lors, le conducteur, n'ayant plus à se soucier de la surveillance de la scène de route, peut reporter son attention sur d'autres activités que la conduite. En particulier, il est envisageable que le conducteur d'un tel véhicule autonome puisse ne plus focaliser son attention sur la scène de route et, par exemple, se retourner complètement en direction des sièges arrière. Il peut alors être souhaité par le conducteur de donner à son habitacle une ambiance lumineuse spécifique, différente de la lumière tamisée et neutre qu'impose une situation de conduite manuelle, voir par exemple DE 10 2013 006793 A1.

Il est connu de DE 10 2015 008666 A1 un système d'éclairage d'ambiance dans un véhicule ne possédant pas de mode de conduite autonome, ledit système permettant de faire varier l'éclairage intérieur en fonction d'un son ou d'une musique, et en fonction de la vitesse du véhicule, notamment lorsque le véhicule est à l'arrêt.

La présente invention s'inscrit dans ce contexte et vise à proposer des moyens de mise en oeuvre d'un éclairage intérieur adapté aux souhaits d'un usager d'un véhicule autonome.

Selon l'invention, le système d'éclairage intérieur pour véhicule automobile autonome comporte au moins un module de conduite autonome et un dispositif lumineux d'éclairage intérieur comprenant une pluralité de sous-ensembles lumineux, selon les caractéristiques de la revendication 1.

Par paramètre de commande de conduite autonome, on entend couvrir les paramètres en provenance d'un module de contrôle d'un poste de conduite autonome, c'est à dire un module de contrôle configuré pour détecter et analyser les évènements apparaissant sur la scène de route et configuré pour donner des instructions de pilotage autonome aux actionneurs associés en fonction de la détection et l'analyse préalable.

Un paramètre en provenance d'un module de contrôle peut par exemple, en plus d'être un état de conduite, à savoir si le véhicule est en conduite autonome ou en conduite manuelle, être une alerte sur une situation à venir, par exemple si une situation d'urgence implique la reprise en main du volant par le conducteur.

Notamment, on peut selon l'invention contrôler le déclenchement d'une projection dynamique, c'est-à-dire d'un signal lumineux qui varie en intensité et/ou en couleur, en fonction du risque de gêne du conducteur. Si le véhicule est en mode autonome, il n'y a pas de risque de gêner un conducteur et donc le signal lumineux peut varier, tandis que si un conducteur est au volant et gère le pilotage du véhicule, il convient qu'un éventuel signal lumineux dynamique ne soit pas visible par le conducteur pour ne pas attirer son regard et le détourner de la scène de route.

Selon l'invention :
- au moins un sous-ensemble lumineux est configuré pour, dans le mode dynamique, diffuser une lumière d'ambiance dont l'intensité et/ou la couleur et/ou l'orientation varie en fonction d'une instruction de commande relative à un élément sonore ; et/ou
- au moins un sous-ensemble lumineux est configuré pour, dans le mode dynamique, diffuser une lumière d'ambiance dont l'intensité et/ou la couleur et/ou l'orientation varie en fonction d'une instruction de commande relative à un élément visuel.

Par une instruction de commande relative à un élément sonore, on comprend que le module de commande est configuré pour recevoir des informations en provenance d'au moins un capteur de son disposé dans l'habitacle du véhicule, le module de commande étant configuré pour faire varier l'intensité et/ou la couleur du signal lumineux qu'il commande en fonction du volume et de la fréquence du son détecté.

Par une instruction de commande relative à un élément visuel, on comprend que le module de commande est configuré pour recevoir des informations en provenance d'au moins un moyen d'acquisition d'image qui peut notamment être tourné vers l'extérieur du véhicule, le module de commande étant configuré pour projeter une image en relation avec l'image détectée à l'extérieur : notamment, le module de commande pourrait projeter une image de plage sous le soleil lorsqu'il est détecté un paysage urbain sous la pluie.

Selon d'autres caractéristiques de l'invention, prises seules ou en combinaison, on pourra prévoir que :
- chaque sous-ensemble lumineux est piloté par un module de commande configuré pour recevoir un paramètre en provenance du module de conduite autonome et pour définir le mode dynamique d'éclairage intérieur, ou le - mode statique d'éclairage intérieur, du sous-ensemble lumineux correspondant ;
- au moins un sous-ensemble lumineux est piloté automatiquement en fonction d'une détection d'information reçue par le module de commande ;
- au moins un sous-ensemble lumineux est piloté sous l'effet d'une commande manuelle ;
- au moins un sous-ensemble lumineux comporte une ou plusieurs sources lumineuses et au moins un élément optique de mise en forme des rayons ;
- l'au moins un élément optique est configuré pour réaliser une rétro-projection ;
- l'au moins un élément optique est une surface vitrée transparente ou translucide configurée pour émettre de la lumière ;
- l'au moins un élément optique est positionné sur la planche de bord ;
- la ou les sources lumineuses et le au moins un élément optique du au moins un sous-ensemble lumineux forment partie d'un pico-projecteur ;
- l'au moins un élément optique est un moyen de déviation des rayons sur une surface de projection ;
- la surface de projection est disposée sur un autre élément structurel de l'habitacle que celui d'où émet le sous-ensemble lumineux ; à titre d'exemple, le sous ensemble lumineux pourra être implanté au niveau du pavillon du véhicule et émettre des rayons lumineux vers une surface vitrée latérale ;
- au moins un premier sous-ensemble lumineux est disposé à l'avant de l'habitacle et en ce qu'au moins un deuxième sous-ensemble lumineux est disposé à l'arrière de l'habitacle ; on entend par avant et arrière de l'habitacle, les zones disposées de part et d'autre d'un plan passant par les dossiers des sièges avant ;
- le ou les premiers sous-ensembles peuvent être pilotés indépendamment du ou des deuxièmes sous-ensembles.

L'invention concerne également un procédé d'éclairage intérieur d'un véhicule automobile autonome, selon la revendication 14.

On vise ainsi à protéger le fait que l'ambiance lumineuse, c'est-à-dire le mode dynamique d'éclairage intérieur, peut être désactivée quand le conducteur est en mode manuel.

Pour un véhicule automobile autonome comprenant au moins un premier sous-ensemble lumineux disposé à l'avant de l'habitacle et au moins un deuxième sous-ensemble lumineux disposé à l'arrière de l'habitacle, le procédé selon l'invention peut être tel que lorsque l'ensemble des sous-ensembles lumineux est en mode dynamique d'éclairage intérieur, l'au moins un deuxième sous-ensemble lumineux reste activé en mode dynamique après réception d'un paramètre selon lequel le véhicule est en conduite manuelle, ou bien après réception d'un paramètre selon lequel le conducteur doit reprendre le volant suite à une détection d'urgence ou d'évènement non compilé dans le module de commande, l'au moins un premier sous-ensembles étant lui piloté pour être activé en mode statique.

D'autres caractéristiques et avantages de la présente invention apparaitront plus clairement à l'aide de la description et des dessins parmi lesquels :
- la figure 1 est une vue en coupe latérale d'un habitacle de véhicule automobile illustrant un système d'éclairage intérieur selon l'invention, dans une première configuration ;
- la figure 2 est une vue similaire à celle de la figure 1, avec le système d'éclairage intérieur selon l'invention dans une deuxième configuration ;
- les figures 3 et 4 sont des vues de l'habitacle intérieur d'un véhicule automobile équipé d'un système d'éclairage intérieur selon l'invention, rendant visible les sièges avant et la planche de bord et un sous ensemble lumineux fonctionnant en projection sur une surface vitrée à distance (figure 3) ou bien fonctionnant en rétro-projection sur une surface transparente ou translucide de l'élément de structure sur lequel le sous-ensemble lumineux est embarqué (figure 4) ; et
- la figure 5 est un organigramme représentatif d'un procédé d'éclairage intérieur d'un véhicule automobile selon l'invention.

Dans la suite du document les termes « avant » et « arrière » sont pris en référence à l'avant et à l'arrière d'un véhicule automobile, selon son sens normal de marche.

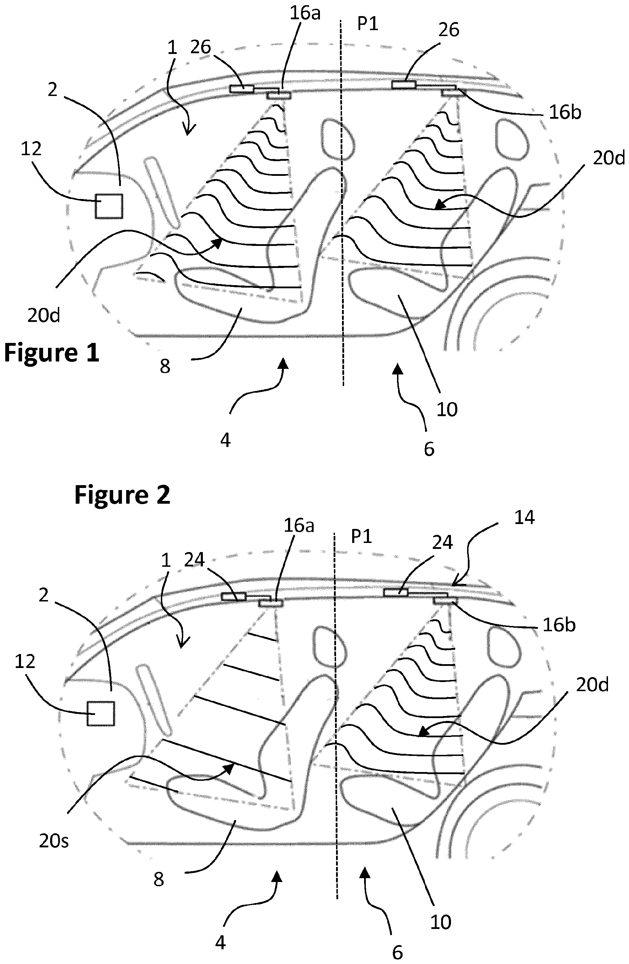

On a illustré sur les figures 1 et 2 un habitacle de véhicule automobile autonome 1, qui comporte ici un poste de conduite 2, agencé dans une partie avant 4 de l'habitacle.

L'habitacle est séparé entre cette partie avant 4 et une partie arrière 6, la partie avant comportant notamment les deux sièges avant 8, dont le siège conducteur qui est disposé en regard du poste de conduite, et la partie arrière comportant notamment les sièges ou banquette arrière 10.

On peut définir une séparation entre ces deux zones comme le plan P1 passant par le dossier des sièges avant, ou bien, si les sièges avant son décalés l'un par rapport à l'autre, comme le plan perpendiculaire à l'axe longitudinal du véhicule passant par le dossier du conducteur.

On comprend de la sorte que lorsque le conducteur est au volant et regarde la scène de route devant le véhicule, ce qui se passe dans la partie arrière de l'habitacle n'est pas visible par le conducteur.

Le véhicule autonome comporte, ici logé dans le poste de conduite 2, un module de conduite autonome 12, qui est configuré pour définir les commandes de conduite à réaliser automatiquement en lieu et place du conducteur lorsque les conditions de sécurité sont respectées. Ce module de conduite autonome est configuré pour générer une information d'état de la configuration du véhicule, ou paramètre de commande de conduite autonome, c'est-à-dire une information relative au fonctionnement ou à l'arrêt du mode autonome

Le véhicule autonome comporte un système d'éclairage intérieur qui comprend au moins ce module de conduite autonome 12 et un dispositif lumineux d'éclairage intérieur 14.

Un dispositif lumineux d'éclairage intérieur 14 comporte une pluralité de sous-ensembles lumineux 16. Chaque sous-ensemble comporte au moins une source lumineuse et un dispositif optique associé configuré pour mettre en forme le signal lumineux émis.

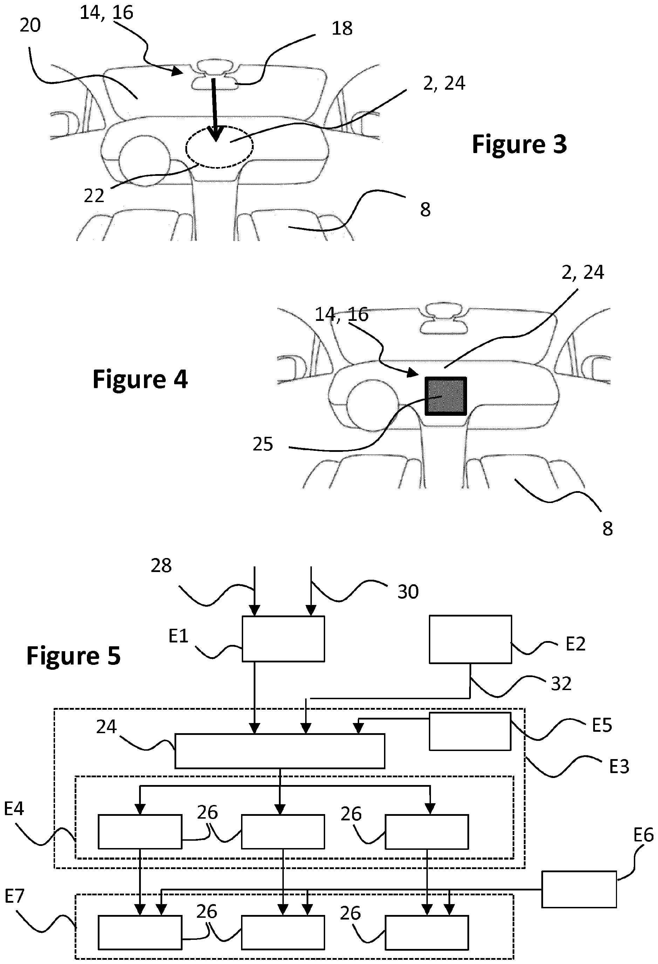

Tel qu'illustré sur la figure 3, un sous-ensemble lumineux peut comprendre des composants configurés pour créer un dispositif de projection frontale, c'est-à-dire un dispositif embarqué dans un élément de structure du véhicule, ici un rétroviseur central 18, et configuré pour projeter un faisceau 20 sur une zone de projection 22 disposée à distance de cet élément de structure.

Tel qu'illustré sur la figure 4, un sous-ensemble lumineux peut comprendre des composants configurés pour créer un dispositif de rétroprojection, c'est-à-dire un dispositif lumineux intégré dans un élément de structure du véhicule, ici la planche de bord 24, et configuré pour éclairer une surface 25 aux propriétés réfractrices, transparent ou translucide, et à travers laquelle les rayons émis par la source lumineuse sont dirigés vers l'habitacle.

Un ou plusieurs premiers sous-ensembles 16a sont configurés pour émettre un faisceau lumineux dans la partie avant 4 de l'habitacle, tandis qu'un ou plusieurs deuxièmes sous-ensembles 16b sont configurés pour émettre un faisceau lumineux dans la partie arrière 6.

Sur les figures 1 et 2, on a illustré de façon schématique une implantation d'un premier sous-ensemble lumineux 16a dans la partie avant 4 de l'habitacle, et d'un deuxième sous-ensemble lumineux 16b dans la partie arrière 6 de l'habitacle.

Chaque sous-ensemble lumineux 16 est configuré pour émettre selon un mode d'éclairage intérieur dynamique ou selon un mode d'éclairage intérieur statique, le mode d'éclairage intérieur dynamique consistant en des signaux lumineux de couleur et/ou d'intensité et/ou d'orientation variable(s), et chaque sous-ensemble lumineux 16 est piloté à cet effet par un module de commande 26 spécifique qui génère des instructions de commande de pilotage de la source lumineuse et/ou du dispositif optique.

A titre d'exemple, et tel que cela sera décrit plus en détails ci-après en relation avec le procédé d'éclairage intérieur selon l'invention, on peut prévoir que dans un premier temps, tel qu'illustré sur la figure 1, le premier et le deuxième sous-ensemble lumineux sont pilotés de manière à générer un signal lumineux dynamique, modélisé sur la figure par un faisceau 20d aux traits ondulés, tandis que dans un deuxième temps, tel qu'illustré sur la figure 2, le premier sous-ensemble lumineux 16a, disposé dans le voisinage du conducteur, ici à l'aplomb de celui-ci, est piloté de manière à générer un signal lumineux statique, modélisé sur la figure par un faisceau 20s aux traits droits, et le deuxième sous-ensemble lumineux 16b, disposé à l'arrière du véhicule, continue à émettre un signal lumineux dynamique 20d.

L'éclairage intérieur dynamique, ou éclairage d'ambiance, idéalement réalisé par des systèmes lumineux, tels que des Leds multi couleurs de type RGB, par exemple, positionnés à divers endroits de l'habitacle, pourra être configuré en couleur, en luminosité et en contraste, par l'occupant lui-même, soit de façon plus autonome, comme par exemple de façon synchronisé avec de la musique. On pourra prévoir la présence d'une ou plusieurs LEDs de couleurs, éventuellement différentes, ou LEDs blanches ou de type RGB, ou tout autre type de source lumineuse.

L'éclairage d'ambiance est dynamique en fonction d'un son, et notamment d'une musique et/ou en fonction d'un visuel, et notamment d'une image d'un paysage à l'extérieur du véhicule.

Le dynamisme de l'éclairage intérieur peut être de la sorte généré à l'origine par une détection d'un son particulier, par exemple par l'intermédiaire d'un capteur de son. Un tel capteur est configuré pour détecter le son présent dans l'habitacle du véhicule, et le cas échéant pour détecter le son émis par un appareil de lecture mobile, par branchement d'un connecteur approprié.

Le mode d'éclairage dynamique est déclenché automatiquement dès la détection d'une musique dans l'habitacle, ou bien suite à une commande manuelle. Dans chacun des cas, l'éclairage d'une partie de l'habitacle en un mode dynamique ou statique est contrôlé en fonction de l'activation ou non du mode de conduite autonome.

En effet, selon l'invention, la condition pour mettre en oeuvre cet éclairage dynamique, au moins pour ce qui est de la partie avant du véhicule, est que le véhicule soit dans une configuration de conduite autonome.

Les sous-ensembles lumineux répartis dans l'habitacle peuvent être pilotés indépendamment selon qu'ils sont associés à la partie avant ou à la partie arrière de l'habitacle.

Il est ainsi possible d'une part de considérer des ambiances différentes à l'avant et à l'arrière de l'habitacle, depuis des éclairages positionnés au niveau des plafonniers, des panneaux de portes, ou toute autre localisation dans l'habitacle.

Il est possible d'autre part de ne désactiver l'éclairage d'ambiance, lorsque le véhicule revient en mode manuel, seulement dans la partie du véhicule que le conducteur a dans son champ de vision, afin de permettre à ce dernier de conserver le contrôle du véhicule et aux passagers arrière de continuer à profiter du mode dynamique d'éclairage intérieur.

On va maintenant décrire plus en détails la mise en oeuvre du système d'éclairage intérieur selon l'invention, en s'appuyant sur l'organigramme de la figure 5, un procédé d'éclairage intérieur se déroulant à titre d'exemple de la façon suivante.

Dans une première étape E1, on sélectionne un mode d'éclairage, notamment selon l'invention, dynamique ou statique. Tel que cela a pu être précisé auparavant, le mode statique d'éclairage intérieur correspond à un mode d'éclairage dans lequel les sources lumineuses sont fixes et fournissent un signal lumineux constant, tandis que le mode d'éclairage dynamique correspond à un mode d'éclairage dans lequel le signal lumineux émis varie dans le temps, sans l'intervention de l'utilisateur.

Plus particulièrement, on réalise dans cette première étape de sélection E1 un déclenchement d'un mode d'éclairage dynamique. Cette première étape de sélection du mode d'éclairage peut être mise en oeuvre par une action automatique 28, par exemple au démarrage du véhicule, ou bien de façon manuelle, par une action 30 d'un utilisateur sur un ou plusieurs boutons de commande disposés dans l'habitacle.

Le mode d'éclairage dynamique débute dès que la première étape de sélection est opérée et que les conditions de déclenchement sont détectées, par exemple dès qu'il y a un résultat à une étape de détection audio E2, c'est-à-dire détection d'une succession de sons témoignant de la présence de musique dans l'habitacle.

Dans l'exemple décrit, c'est la détection d'information(s) 32 relative(s) à la présence de musique qui déclenche le process d'éclairage E3 selon un mode d'éclairage dynamique, mais on pourrait sans sortir du contexte de l'invention prévoir que la sélection du mode d'éclairage, dynamique ou statique, se fait en fonction d'une commande de déclenchement manuelle.

Au cours de ce process d'éclairage E3, on réalise une étape de commande E4 de chacun des modules de commande respectivement associés à chaque sous-ensemble lumineux, qui sont configurés pour donner des instructions de commande au sous-ensemble lumineux qu'il commande, et notamment des instructions d'allumage et/ou d'extinction des sources de lumière et des instructions de fonctionnement en intensité et/ou en couleur de ces sources de lumière et/ou des instructions de fonctionnement d'un élément optique associé, par exemple l'orientation d'un réflecteur pour modifier la zone de projection du faisceau lumineux.

Le choix des sous-ensembles lumineux à qui faire parvenir les instructions de commande peut notamment prendre en compte les résultats d'une étape de sélection E5 de la zone d'éclairage.

Dans le cas où la commande de mise en oeuvre du système d'éclairage intérieur selon l'invention est manuelle, le système peut être configuré pour détecter dans quelle zone du véhicule a eu lieu la commande manuelle et pour cibler la zone d'éclairage en fonction de cette détection préalable.

Dans le cas où la commande de mise en oeuvre du système d'éclairage intérieur est automatique, le système est configuré pour que l'ensemble des modules de commande puisse simultanément piloter leur sous-ensemble lumineux associé en un mode dynamique d'éclairage intérieur. Le système peut d'ailleurs être configuré pour que les modules de commande pilotent de façon coordonnée chacun des sous-ensembles lumineux, c'est-à-dire que chaque sous-ensemble lumineux peut émettre un signal lumineux différent de manière à former un éclairage d'ensemble cohérent par rapport à la musique détectée lors que l'on souhaite réaliser cet éclairage à cheval sur plusieurs zones du véhicule, ou en variante, pour que les modules de commande pilotent de façon indépendante chacun des sous-ensembles lumineux.

Le cas échéant, un organe central de commande 34 est configuré pour recevoir les informations collectées dans les étapes E1, E2 et E5 pour définir les instructions de commande correspondantes de chacun des modules de commande 26 associés aux sous-ensembles lumineux 16.

Dans une autre étape du procédé E6, dite étape de récupération des informations sur l'état du véhicule en conduite autonome ou manuelle, les modules de commande sont configurés pour recevoir en temps réel, ou à tout le moins à chaque changement d'état, une information d'état en provenance du module de conduite autonome indiquant si le véhicule autonome est dans un mode de conduite autonome ou manuelle.

Dans une étape ultérieure du procédé E7, chaque module de commande est alors configuré pour, en fonction de sa position dans une partie avant ou une partie arrière de l'habitacle, c'est-à-dire une partie de l'habitacle dont l'éclairage est susceptible d'être directement vu par le conducteur, mettre fin au mode dynamique d'éclairage intérieur lorsqu'il reçoit une information de passage dans un mode de conduite manuelle.

L'invention permet ainsi de fournir aux passagers d'un véhicule autonome, un éclairage d'ambiance, c'est-à-dire un éclairage dynamique dont l'intensité, la couleur ou encore l'orientation est susceptible de varier pour suivre les variations de la musique jouée dans l'habitacle, ou dans un appareil mobile propre à l'un des passagers, ou les variations d'aspect visuel des scènes extérieures au véhicule, tout en respectant les conditions de sécurité de conduite lorsque le véhicule est piloté manuellement, c'est-à-dire en fournissant un éclairage statique, constant dans le temps, dans la partie du véhicule que le conducteur est à même de percevoir. L'invention ne saurait toutefois se limiter aux moyens exposés et aux exemples décrits et illustrés par les figures, et elle s'étend à toute combinaison techniquement opérante de ces moyens définie par les revendications.

## Revendications

1. Système d'éclairage intérieur pour véhicule automobile autonome, comportant au moins un module de conduite autonome (12) et un dispositif lumineux d' éclairage intérieur (14) comprenant une pluralité de sous-ensembles lumineux (16a,16b), **caractérisé en ce que** chaque sous-ensemble lumineux est configuré en un mode statique d'éclairage intérieur pour émettre un signal lumineux constant dans le temps ou en un mode dynamique d'éclairage intérieur pour émettre un signal lumineux variant dans le temps, au moins un sous-ensemble lumineux étant configuré pour passer du mode statique au mode dynamique, et inversement, en fonction d'au moins un paramètre de commande de conduite autonome en provenance dudit module de conduite autonome, ledit paramètre étant un état de conduite, à savoir si le véhicule est en conduite autonome ou en conduite manuelle,
et
- **en ce qu'**au moins un sous-ensemble lumineux (16a, 16b) est configuré pour, dans le mode dynamique, diffuser une lumière d'ambiance dont l'intensité et/ou la couleur et/ou l'orientation varie en fonction d'une instruction de commande relative à un élément sonore, et/ou
- **en ce qu'**au moins un sous-ensemble lumineux (16a, 16b) est configuré pour, dans le mode dynamique, diffuser une lumière d'ambiance dont l'intensité et/ou la couleur et/ou l'orientation varie en fonction d'une instruction de commande relative à un élément visuel.

2. Système d'éclairage intérieur selon la revendication 1, **caractérisé en ce que** chaque sous-ensemble lumineux (16a, 16b) est piloté par un module de commande (26) configuré pour recevoir un paramètre de commande de conduite autonome en provenance du module de conduite autonome (12) et pour définir le mode dynamique d'éclairage intérieur, ou le mode statique d'éclairage intérieur, du sous-ensemble lumineux correspondant.

3. Système d'éclairage intérieur selon la revendication 2, **caractérisé en ce qu'**au moins un sous-ensemble lumineux (16a, 16b) est piloté automatiquement en fonction d'une détection d'information (32) reçue par le module de commande (26).

4. Système d'éclairage intérieur selon l'une des revendications 1 à 3, **caractérisé en ce qu'**au moins un sous-ensemble lumineux (16a, 16b) est piloté sous l'effet d'une commande manuelle.

5. Système d'éclairage intérieur selon l'une des revendications précédentes, **caractérisé en ce qu'**au moins sous-ensemble lumineux (16a, 16b) comporte une ou plusieurs sources lumineuses et au moins un élément optique de mise en forme des rayons lumineux émis par la ou les sources.

6. Système d'éclairage intérieur selon la revendication 5, **caractérisé en ce que** la ou les sources et le au moins un élément optique du au moins un sous-ensemble lumineux est configuré pour réaliser une rétro-projection.

7. Système d'éclairage intérieur selon la revendication précédente, **caractérisé en ce que** le au moins un élément optique est une surface (25) vitrée transparente ou translucide configurée pour émettre de la lumière.

8. Système d'éclairage intérieur selon l'une des revendications 5 à 7, **caractérisé en ce que** le au moins un élément optique est positionné sur la planche de bord (24).

9. Système d'éclairage intérieur selon la revendication 5, **caractérisé en ce que** la ou les sources lumineuses et le au moins un élément optique du au moins un sous-ensemble lumineux forment partie d'un pico-projecteur.

10. Système d'éclairage intérieur selon la revendication précédente, **caractérisé en ce que** le au moins un élément optique est un moyen de déviation des rayons sur une zone de projection (22).

11. Système d'éclairage intérieur selon la revendication précédente, **caractérisé en ce que** la zone de projection (22) est destinée à être disposée sur un autre élément structurel de l'habitacle que celui d'où émet le sous-ensemble lumineux.

12. Système d'éclairage intérieur selon l'une des revendications précédentes, **caractérisé en ce qu'**au moins un premier sous-ensemble lumineux (16a) est destiné à être disposé dans une partie avant (4) de l'habitacle et **en ce qu'**au moins un deuxième sous-ensemble lumineux (16b) est destiné à être disposé dans une partie arrière (6) de l'habitacle.

13. Système d'éclairage intérieur selon la revendication précédente, **caractérisé en ce que** le ou les premiers sous-ensembles (16a) peuvent être pilotés indépendamment du ou des deuxièmes sous-ensembles (16b).

14. Procédé d'éclairage intérieur d'un véhicule automobile autonome mettant en oeuvre un système d'éclairage intérieur selon l'une des revendications précédentes, **caractérisé en ce qu'**il comprend une étape (E1) de sélection d'un mode statique d'éclairage intérieur ou d'un mode dynamique d'éclairage intérieur, une étape (E5) de sélection d'une zone d'éclairage, une étape (E6) de récupération d'information sur l'état du véhicule en conduite autonome ou manuelle, et **en ce qu'**il comprend une étape (E7) de configuration d'un ou plusieurs sous-ensembles lumineux associés à la zone d'éclairage en fonction du mode d'éclairage et du mode de conduite.

15. Procédé d'éclairage intérieur d'un véhicule automobile autonome selon la revendication précédente, le véhicule automobile autonome comprenant au moins un premier sous-ensemble lumineux (16a) disposé à l'avant de l'habitacle et au moins un deuxième sous-ensemble lumineux (16b) disposé à l'arrière de l'habitacle, **caractérisé en ce que** lorsque l'ensemble des sous-ensembles lumineux est en mode dynamique d'éclairage intérieur, l'au moins un deuxième sous-ensemble lumineux reste activé en mode dynamique après réception d'un paramètre selon lequel le véhicule est en conduite manuelle, ou bien après réception d'un paramètre selon lequel le conducteur doit reprendre le volant suite à une détection d'urgence ou d'évènement non compilé dans le module de commande, l'au moins un premier sous-ensemble étant lui piloté pour être activé en mode statique.

## Patentansprüche

1. Innenbeleuchtungssystem für ein autonomes Kraftfahrzeug, das mindestens ein autonomes Fahrmodul (12) und eine Innenbeleuchtungs-Leuchtvorrichtung (14) aufweist, die eine Vielzahl von Leuchtbaugruppen (16a, 16b) enthält, **dadurch gekennzeichnet, dass** jede Leuchtbaugruppe in einem statischen Innenbeleuchtungsmodus, um ein zeitlich konstantes Lichtsignal zu emittieren, oder in einem dynamischen Innenbeleuchtungsmodus konfiguriert ist, um ein zeitlich variables Lichtsignal zu emittieren, wobei mindestens eine Leuchtbaugruppe konfiguriert ist, vom statischen Modus in den dynamischen Modus und umgekehrt überzugehen, abhängig von mindestens einem vom autonomen Fahrmodul kommenden Steuerparameter autonomen Fahrens, wobei der Parameter ein Fahrzustand ist, d.h. ob das Fahrzeug autonom fahrend oder manuell fahrend ist,
und
- dass mindestens eine Leuchtbaugruppe (16a, 16b) konfiguriert ist, im dynamischen Modus ein Umgebungslicht zu verbreiten, dessen Stärke und/oder Farbe und/oder Ausrichtung abhängig von einer Steueranweisung bezüglich eines Klangelements variiert, und/oder
- dass mindestens eine Leuchtbaugruppe (16a, 16b) konfiguriert ist, im dynamischen Modus ein Umgebungslicht zu verbreiten, dessen Stärke und/oder Farbe und/oder Ausrichtung abhängig von einer Steueranweisung bezüglich eines Bildelements variiert.

2. Innenbeleuchtungssystem nach Anspruch 1, **dadurch gekennzeichnet, dass** jede Leuchtbaugruppe (16a, 16b) von einem Steuermodul (26) gesteuert wird, das konfiguriert ist, einen Steuerparameter autonomen Fahrens vom autonomen Fahrmodul (12) zu empfangen und den dynamischen Innenbeleuchtungsmodus oder den statischen Innenbeleuchtungsmodus der entsprechenden Leuchtbaugruppe zu definieren.

3. Innenbeleuchtungssystem nach Anspruch 2, **dadurch gekennzeichnet, dass** mindestens eine Leuchtbaugruppe (16a, 16b) abhängig von einer vom Steuermodul (26) empfangenen Informationserkennung (32) automatisch gesteuert wird.

4. Innenbeleuchtungssystem nach einem der Ansprüche 1 bis 3, **dadurch gekennzeichnet, dass** mindestens eine Leuchtbaugruppe (16a, 16b) unter der Wirkung einer manuellen Steuerung gesteuert wird.

5. Innenbeleuchtungssystem nach einem der vorhergehenden Ansprüche, **dadurch gekennzeichnet, dass** mindestens eine Leuchtbaugruppe (16a, 16b) eine oder mehrere Lichtquellen und mindestens ein optisches Element zum Formen der von der oder den Quelle (n) emittierten Lichtstrahlen aufweist.

6. Innenbeleuchtungssystem nach Anspruch 5, **dadurch gekennzeichnet, dass** die Quelle oder die Quellen und das mindestens eine optische Element der mindestens einen Leuchtbaugruppe konfiguriert ist, eine Retroprojektion zu realisieren.

7. Innenbeleuchtungssystem nach dem vorhergehenden Anspruch, **dadurch gekennzeichnet, dass** das mindestens eine optische Element eine durchsichtige oder durchscheinende verglaste Fläche (25) ist, die konfiguriert ist, Licht zu emittieren.

8. Innenbeleuchtungssystem nach einem der Ansprüche 5 bis 7, **dadurch gekennzeichnet, dass** das mindestens eine optische Element auf dem Armaturenbrett (24) positioniert ist.

9. Innenbeleuchtungssystem nach Anspruch 5, **dadurch gekennzeichnet, dass** die Lichtquelle oder die Lichtquellen und das mindestens eine optische Element der mindestens einen Leuchtbaugruppe Teil eines Pico-Projektors sind.

10. Innenbeleuchtungssystem nach dem vorhergehenden Anspruch, **dadurch gekennzeichnet, dass** das mindestens eine optische Element eine Umlenkeinrichtung der Strahlen auf eine Projektionszone (22) ist.

11. Innenbeleuchtungssystem nach dem vorhergehenden Anspruch, **dadurch gekennzeichnet, dass** die Projektionszone (22) dazu bestimmt ist, auf einem anderen Strukturelement des Fahrzeuginnenraums angeordnet zu werden als dasjenige, von wo die Leuchtbaugruppe emittiert.

12. Innenbeleuchtungssystem nach einem der vorhergehenden Ansprüche, **dadurch gekennzeichnet, dass** mindestens eine erste Leuchtbaugruppe (16a) dazu bestimmt ist, in einem vorderen Bereich (4) des Fahrzeuginnenraums angeordnet zu werden, und dass mindestens eine zweite Leuchtbaugruppe (16b) dazu bestimmt ist, in einem hinteren Teil (6) des Fahrzeuginnenraums angeordnet zu werden.

13. Innenbeleuchtungssystem nach dem vorhergehenden Anspruch, **dadurch gekennzeichnet, dass** die erste Baugruppe oder Baugruppen (16a) unabhängig von der zweiten Baugruppe oder Baugruppen (16b) gesteuert werden können.

14. Innenbeleuchtungsverfahren eines autonomen Kraftfahrzeugs, das ein Innenbeleuchtungssystem nach einem der vorhergehenden Ansprüche einsetzt, **dadurch gekennzeichnet, dass** es einen Schritt (E1) der Auswahl eines statischen Innenbeleuchtungsmodus oder eines dynamischen Innenbeleuchtungsmodus, einen Schritt (E5) der Auswahl einer Beleuchtungszone, einen Schritt (E6) des Informationsabrufs über den autonom oder manuell fahrenden Zustand des Fahrzeugs enthält, und dass es einen Schritt (E7) der Konfiguration einer oder mehrerer der Beleuchtungszone zugeordneter Leuchtbaugruppen abhängig vom Beleuchtungsmodus und vom Fahrmodus enthält.

15. Innenbeleuchtungsverfahren eines autonomen Kraftfahrzeugs nach dem vorhergehenden Anspruch, wobei das autonome Kraftfahrzeug mindestens eine erste Leuchtbaugruppe (16a), die im vorderen Bereich des Fahrzeuginnenraums angeordnet ist, und mindestens eine zweite Leuchtbaugruppe (16b) enthält, die im hinteren Bereich des Fahrzeuginnenraums angeordnet ist, **dadurch gekennzeichnet, dass**, wenn die Gesamtheit der Leuchtbaugruppen im dynamischen Innenbeleuchtungsmodus ist, die mindestens eine zweite Leuchtbaugruppe nach dem Empfang eines Parameters, gemäß dem das Fahrzeug manuell fahrend ist, oder aber nach dem Empfang eines Parameters, gemäß dem der Fahrer nach einer Erkennung eines Notfalls oder eines nicht im Steuermodul kompilierten Ereignisses das Steuer wieder übernehmen muss, im dynamischen Modus aktiviert bleibt, wobei die mindestens eine erste Baugruppe ihrerseits gesteuert wird, um im statischen Modus aktiviert zu werden.

## Claims

1. Interior lighting system for an autonomous automotive vehicle, comprising at least one autonomous driving module (12) and an interior lighting luminous device (14) comprising a plurality of luminous sub-assemblies (16a, 16b), **characterized in that** each luminous sub-assembly is configured in an interior lighting static mode for emitting a luminous signal which is constant over time or in an interior lighting dynamic mode for emitting a luminous signal which varies over time, at least one luminous sub-assembly being configured to pass from the static mode to the dynamic mode, and vice versa, as a function of at least one autonomous driving control parameter from said autonomous driving module, said parameter being a driving state, namely if the vehicle is in autonomous driving or manual driving,
and
- **in that** at least one luminous sub-assembly (16a, 16b) is configured to, in the dynamic mode, diffuse an ambient light, the intensity and/or the colour and/or the orientation thereof varying as a function of a control command relative to an audible element, and/or
- **in that** at least one luminous sub-assembly (16a, 16b) is configured to, in the dynamic mode, diffuse an ambient light, the intensity and/or the colour and/or the orientation thereof varying as a function of a control command relative to a visual element.

2. Interior lighting system according to Claim 1, **characterized in that** each luminous sub-assembly (16a, 16b) is controlled by a control module (26) which is configured to receive an autonomous driving control parameter from the autonomous driving module (12) and to define the interior lighting dynamic mode or the interior lighting static mode of the corresponding luminous sub-assembly.

3. Interior lighting system according to Claim 2, **characterized in that** at least one luminous sub-assembly (16a, 16b) is controlled automatically as a function of detecting information (32) received by the control module (26).

4. Interior lighting system according to one of Claims 1 to 3, **characterized in that** at least one luminous sub-assembly (16a, 16b) is controlled by the action of a manual control.

5. Interior lighting system according to one of the preceding claims, **characterized in that** at least one luminous sub-assembly (16a, 16b) comprises one or more luminous sources and at least one optical element for forming the light beams emitted by the source or sources.

6. Interior lighting system according to Claim 5, **characterized in that** the source or sources and the at least one optical element of the at least one luminous sub-assembly are configured to produce a rear projection.

7. Interior lighting system according to the preceding claim, **characterized in that** the at least one optical element is a transparent or translucent glazed surface (25) configured to emit light.

8. Interior lighting system according to one of Claims 5 to 7, **characterized in that** the at least one optical element is positioned on the dashboard (24).

9. Interior lighting system according to Claim 5, **characterized in that** the light source or sources and the at least one optical element of the at least one luminous sub-assembly form part of a pico projector.

10. Interior lighting system according to the preceding claim, **characterized in that** the at least one optical element is a means of diverting beams onto a projection zone (22).

11. Interior lighting system according to the preceding claim, **characterized in that** the projection zone (22) is intended to be arranged on a different structural element of the passenger compartment from the one where the luminous sub-assembly emits light.

12. Interior lighting system according to one of the preceding claims, **characterized in that** at least one first luminous sub-assembly (16a) is intended to be arranged in a front part (4) of the passenger compartment, and **in that** at least one second luminous sub-assembly (16b) is intended to be arranged in a rear part (6) of the passenger compartment.

13. Interior lighting system according to the preceding claim, **characterized in that** the first sub-assembly or sub-assemblies (16a) may be controlled independently of the second sub-assembly or sub-assemblies (16b).

14. Method for interior lighting of an autonomous automotive vehicle implementing an interior lighting system according to one of the preceding claims, **characterized in that** it comprises a step (E1) of selecting an interior lighting static mode or an interior lighting dynamic mode, a step (E5) of selecting a lighting zone, a step (E6) of collecting information on the status of the vehicle in autonomous or manual driving, and **in that** it comprises a step (E7) of configuring one or more luminous sub-assemblies associated with the lighting zone as a function of the lighting mode and the driving mode.

15. Method for interior lighting of an autonomous automotive vehicle according to the preceding claim, the autonomous automotive vehicle comprising at least one first luminous sub-assembly (16a) arranged at the front of the passenger compartment and at least one second luminous sub-assembly (16b) arranged at the rear of the passenger compartment, **characterized in that** when all of the luminous sub-assemblies are in interior lighting dynamic mode, the at least one second luminous sub-assembly remains activated in dynamic mode after receiving a parameter according to which the vehicle is in manual driving or after receiving a parameter according to which the driver has to take up the steering wheel following a detection of an urgent situation or event not stored in the control module, the at least one first sub-assembly being in turn controlled so as to be activated in static mode.
